Europäisches Patentamt

European Patent Office

Office européen des brevets

(19)

(11) Veröffentlichungsnummer : **0 588 011 B1**

(12) **EUROPÄISCHE PATENTSCHRIFT**

(45) Veröffentlichungstag der Patentschrift :
**19.07.95 Patentblatt 95/29**

(21) Anmeldenummer : **93111259.3**

(22) Anmeldetag : **14.07.93**

(51) Int. Cl.⁶ : **H02M 7/519**

(54) **Rückspeisefähige Beschaltung für Zweipunkt- und Dreipunkt-Wechselrichter sowie Verfahren zur Rückspeisung der Beschaltungsenergie.**

(30) Priorität : **05.09.92 DE 4229771**

(43) Veröffentlichungstag der Anmeldung :
**23.03.94 Patentblatt 94/12**

(45) Bekanntmachung des Hinweises auf die
Patenterteilung :
**19.07.95 Patentblatt 95/29**

(84) Benannte Vertragsstaaten :
**AT BE CH DE DK ES FR GB IT LI NL SE**

(56) Entgegenhaltungen :
**DE-A- 3 804 478**
**DE-A- 3 833 700**
**DE-A- 3 937 111**

(73) Patentinhaber : **ASEA BROWN BOVERI AG**
**Haselstrasse 16**
**CH-5401 Baden (CH)**

(72) Erfinder : **Niederer, Ralph**
**Hochstrasse 80**
**CH-4053 Basel (CH)**

(74) Vertreter : **Lück, Gert, Dr. et al**
**c/o ABB Management AG,**
**TEI Immaterialgüterrecht,**
**Wiesenstrasse 26**
**CH-5401 Baden (CH)**

EP 0 588 011 B1

## Beschreibung

### Technisches Gebiet

Die Erfindung bezieht sich auf das Gebiet der Leistungselektronik. Sie betrifft eine rückspeisefähige Beschaltung für Zweipunkt-Wechselrichter bzw. Dreipunkt-Wechselrichter nach dem Oberbegriff des Anspruchs 1. Die Erfindung betrifft weiter ein Verfahren zur Rückspeisung der in der Beschaltung gespeicherten Energie.

### Stand der Technik

Damit die Halbleiterschalter von Wechselrichtern grosser Leistung durch allzu grossen Stromanstieg (di/dt) bzw. Spannungsanstieg (du/dt) nicht zerstört werden, müssen sie durch eine Beschaltung (engl. "snubber") geschützt werden. Ausserdem muss die Beschaltung so ausgelegt sein, dass für die Halbleiterschalter eine kleine Ein-/Ausschaltdauer erreicht wird und die Halbleiterschalter beim Ausschalten mit möglichst wenig Spitzenspannung beansprucht werden. Für solche Beschaltungen existieren bereits ein grosse Anzahl von Schaltungsvorschlägen.

Besonders vorteilhaft ist es, wenn diese Beschaltungen möglichst verlustfrei arbeiten. Dies erreicht man am besten dadurch, dass die in den Beschaltungskondensatoren und Beschaltungsspulen gespeicherte Energie wieder in die Gleichspannungsquelle zurückgespeist werden kann. Eine solche rückspeisefähige Beschaltung für Zweipunkt-Wechselrichter ist schon aus der DE 39 37 111 bekannt; eine rückspeisefähige Beschaltung für Dreipunkt-Wechselrichter offenbart schon die DE 38 33 700.

In diesen beiden Druckschriften wird die in der Beschaltung gespeicherte Energie über einen DC/DC-Wandler in die Gleichspannungsquelle, d.h. den sog. Zwischenkreiskondensator, zurückgespeist. Dadurch wird die Schaltung aktiv und verlustarm. Der DC/DC-Wandler besteht dabei vorzugsweise aus einem Transformator mit zwei Primär- und einer Sekundärwicklung. Die gleichsinnigen Anschlüsse der Primärwicklung sind über je eine Rückspeisediode mit je einem Eingang des DC/DC-Wandlers verbunden. Am Eingang des DC/DC-Wandlers liegen ein Rückspeisekondensator und ein Widerstand parallel. Die Sekundärwicklung des Dreiwicklungs-Transformators ist über einen Vollweggleichrichter, bestehend aus vier Dioden, an die Zwischenkreisspannung angeschlossen. Die anfallende rückspeisefähige Verlustleistung wird in dem am Eingang des DC/DC-Wandlers parallel geschalteten Widerstand verheizt.

Nachteilig ist bei dieser Schaltung, dass der Widerstand den Wirkungsgrad der Schaltung beschränkt. Gleichermassen müssen bei der Ein-/Ausschaltdauer allzu grosse Werte in Kauf genommen werden. Ein grösserer Widerstand hat zwar einerseits einen besseren Wirkungsgrad zur Folge, andererseits kann aber die Energie wegen der erhöhten Zeitkonstante nicht mehr so schnell abgeführt werden; die Halbleiterschalter dürfen nämlich erst wieder geschaltet werden, nachdem die Beschaltungsenergie abgeführt worden ist. Andernfalls würde in der Beschaltung immer mehr Energie gespeichert und die Gefahr einer Zerstörung würde drohen. Daher muss eine grössere Ein-/Ausschaltdauer der Halbleiterschalter in Kauf genommen werden.

### Darstellung der Erfindung

Aufgabe der vorliegenden Erfindung ist es nun, einen Zweipunkt- bzw. einen Dreipunkt-Wechselrichter mit einer rückspeisefähigen Beschaltung anzugeben, bei welcher ein hoher Wirkungsgrad, mit idealen Elementen 100%, erreicht wird, und die Ein-/Ausschaltdauer der Halbleiterschalter durch die Erhöhung des Wirkungsgrads nicht eingeschränkt wird.

Diese Aufgabe wird bei einem Zweipunkt- bzw. Dreipunkt-Wechselrichter der eingangs genannten Art durch die Merkmale des ersten Anspruchs bzw. des sechsten Anspruchs gelöst.

Weiter wird ein Verfahren zur Rückspeisung der Beschaltungsenergie angegeben.

Der Kern der Erfindung besteht darin, dass die Rückspeisemittel parallel zum Rückspeisekondensator geschaltet sind und im wesentlichen aus einem Transformator und einem Halbleiterventil bestehen. Durch einmaliges Schalten des Halbleiterventils wird die im Rückspeisekondensator gespeicherte Energie mittels des Transformators in den Zwischenkreiskondensator zurückgespeist.

Gemäss einem bevorzugten Ausführungsbeispiel sind die Rückspeisemittel so gestaltet, dass, bei einem abschaltbaren Halbleiterventil, die gesamte Beschaltungsenergie zurückgespeist, d.h. keine Energie mehr in Wärme umgesetzt wird. Dadurch erreicht man einen theoretischen Wirkungsgrad von 100%.

Der Vorteil des erfindungsgemässen Aufbaus besteht also darin, dass ein sehr hoher Wirkungsgrad erreicht wird, ohne dass die Ein-/Ausschaltfrequenz der Halbleiterschalter beschränkt würde.

Weitere Ausführungsbeispiel ergeben sich aus den Unteransprüchen.

2

**Kurze Beschreibung der Zeichnungen**

Nachfolgend wir die Erfindung anhand von Ausführungsbeispielen im Zusammenhang mit den Zeichnungen näher erläutert.

Es zeigen:

**Fig. 1**    Das Schaltschema eines erfindungsgemässen Zweipunkt-Wechselrichters;

**Fig. 2**    Das Schaltschema eine erfindungsgemässen Dreipunkt-Wechselrichters;

**Fig. 3**    Den qualitativen Verlauf der Spannung an CR (Ucr) und des Stromes durch SR (Isr) mit nichtabschaltbarem Halbleiterventil;

**Fig. 4**    Den qualitativen Verlauf der Spannung an CR (Ucr) und des Stromes durch SR (Isr) mit abschaltbarem Halbleiterventil;

**Fig. 5**    Das Schaltschema einer bevorzugten Ausführungsform eines Zweipunkt-Wechselrichters;

**Fig. 6**    Das Schaltschema einer bevorzugten Ausführungsform eines Dreipunkt-Wechselrichters.

Die in den Zeichnungen verwendeten Bezugzeichen und deren Bedeutung sind in der Beseichnungsliste zusammengefasst aufgelistet. Grundsätzlich sind in den Figuren gleiche Teile mit gleichen Bezugszeichen versehen.

**Wege zur Ausführung der Erfindung**

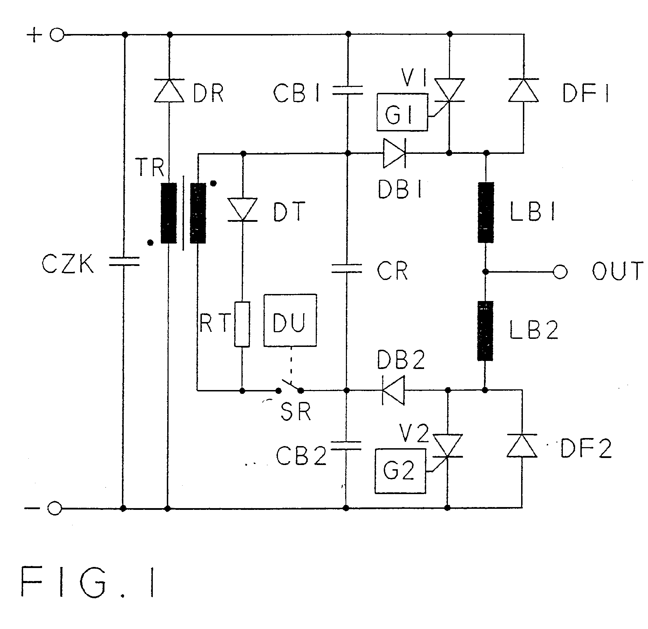

**Figur 1** zeigt das Schaltschema eines Zweipunkt-Wechselrichters mit erfindungsgemässer, rückspeisefähiger Schutzbeschaltung. An eine Gleichspannung, welche an den Plus- bzw. Minus-Eingang (+ bzw. -) angeschlossen werden kann, ist eine Serienschaltung von zwei Halbleiterschaltern (V1, V2) mit dazwischengeschalteten Stromanstiegsbegrenzungsdrosseln (LB1, LB2) gelegt. Bei der Gleichspannung kann es sich beispielsweise um die Zwischenkreisspannung eines Umrichters handeln. Bei den Halbleiterschaltern (V1, V2) handelt es sich vorzugsweise um abschaltbare Ventile, insbesondere um Gate-Turn-Off-Thyristoren (GTO). Die Halbleiterschalter (V1, V2) werden von je einer Gate-Unit (G1, G2) angesteuert. Zwischen den beiden Stromanstiegsbegrenzungsdrosseln (LB1, LB2) ist der Ausgang (OUT) angeordnet. Selbstverständlich könnten die Stromanstiegsbegrenzungsdrosseln auch als eine einzige Drossel ausgeführt sein; der Ausgangsanschluss würde dann durch eine Mittelanzapfung der einzigen Drossel gebildet. Zu jedem Halbleiterschalter (V1, V2) ist eine Freilaufdiode (DF1, DF2) antiparallel geschaltet. Zur Begrenzung des Spannungsanstiegs über den Halbleiterschaltern (V1, V2), ist parallel zu den Schaltern (V1, V2) je eine Serienschaltung, bestehend aus einer Entlastungsdiode (DB1, DB2) und einem Entlastungskondensator (CB1, CB2) angeordnet. Beim ersten Halbleiterschalter (V1) ist die Anode des Schalters mit dem Entlastungskondensator (CB1) und dem Plus-Eingang (+) verbunden, während die Kathode des Schalters mit der Kathode der Entlastungsdiode (DB1) und der Stromanstiegsbegrenzungsdrossel (LB1) verbunden ist. Beim zweiten Halbleiterschalter (V2) ist die Kathode mit dem Minus-Eingang (-) und dem Entlastungskondensator (CB2) verbunden, während die Anode mit der Anode der Entlastungsdiode (DB2) und der Stromanstiegsbegrenzungsdrossel (LB2) verbunden ist.

Zwischen den Verbindungspunkten der Entlastungskondensatoren (CB1 bzw. CB2) und der Entlastungsdioden (DB1 bzw. DB2) und im wesentlichen parallel zu den Stromanstiegsbegrenzungsdrosseln (LB1, LB2) liegt ein Rückspeisekondensator (CR). Im Falle einer nichtrückspeisefähigen Beschaltung wäre an der Stelle des Rückspeisekondensators (CR) ein Widerstand vorhanden. Die in den Stromanstiegsbegrenzungsdrosseln (LB1, LB2) und den Entlastungskondensatoren (CB1, CB2) gespeicherte Energie würde beim Schalten der Halbleiterschalter (V1, V2) in diesem Widerstand verheizt. Bei der vorliegenden, rückspeisefähigen Beschaltung wird sie im Rückspeisekondensator (CR) gespeichert und steht somit zur Rückspeisung zur Verfügung.

Die Rückspeisemittel sind parallel zum Rückspeisekondensator (CR) angeordnet und umfassen ein Halbleiterventil (SR) und eine Serienschaltung eines Widerstands (RT) und einer Diode (DT) auf der Primärseite eines Transformators (TR) und eine Rückspeisediode (DR) auf der Sekundärseite des Transformators (TR). Das Halbleiterventil wird durch eine Drive-Unit (DU) angesteuert und steht mit seinem ersten Anschluss mit der Kathode der Entlastungsdiode (DB2), dem Rückspeisekondensator (CR) und dem Entlastungskondensator (CB2), mit seinem zweiten Anschluss mit dem einen Anschluss der Primärwicklung des Transformators (TR) in Verbindung. Die Drive-Unit (DU) kann dabei aus dem Rückspeisekondensator (CR) gespeist werden. Der andere Anschluss der Primärwicklung ist mit der Anode der Entlastungsdiode (DB1), dem Rückspeisekondensator (CR) und dem Entlastungskondensator (CB1) verbunden. Die Serienschaltung des Widerstand (RT) und der Diode (DT) ist parallel zur Primärwicklung angeordnet, derart, dass die Anode der Diode (DT) mit der Anode der Entlastungsdiode (DB1) verbunden ist. Die Sekundärwicklung ist mit einer Rückspeisediode (DR) in Serie geschaltet. Die Kathode der Rückspeisediode steht mit dem Plus-Eingang (+) in Verbindung, die Sekundärwicklung mit dem Minus-Eingang (-). Diese Serienschaltung von Rückspeisediode (DR) und Sekundärwicklung des Transformators (TR) liegt parallel zum Glättungskondensator des Zwischenkreises, dem sog. Zwischen-

EP 0 588 011 B1

kreiskondensator (CZK).

Die Funktionsweise des Zweipunkt-Wechselrichters mit der erfindungsgemässen Beschaltung soll anhand der Figuren 1, 3 und 4 erläutert werden.

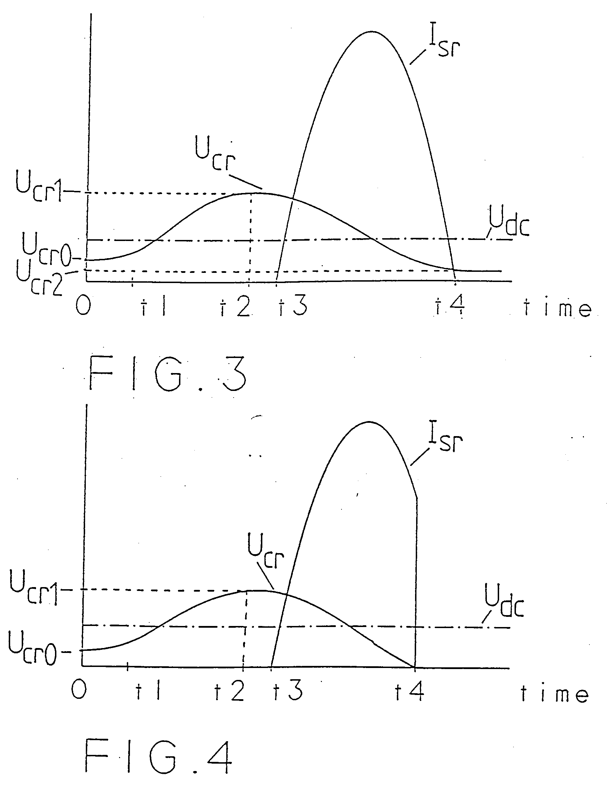

Bei einem zweipoligen Zweipunkt-Wechselrichter, von welchem eine Halbbrücke in Figur 1 dargestellt ist, werden die Halbleiterschalterpaare abwechslungsweise so geschaltet, dass am Ausgang (OUT) abwechslungsweise die Spannung + bzw. - anliegt. In einer Halbbrücke, wie sie in Figur 1 dargestellt ist, werden also abwechselnd die Halbleiterschalter (V1 und V2) ein- und ausgeschaltet. Bei diesem Ein- und Ausschalten müssen die Halbleiterschalter (V1, V2) vor zu schnellen Strom- bzw. Spannungsänderungen geschützt werden. Dies geschieht durch die oben beschriebene Schutzbeschaltung. Da es sich bei der Schutzbeschaltung um Reaktanzen (Stromanstiegsbegrenzungsdrosseln und Entlastungskondensatoren) handelt, wird in der Beschaltung Energie gespeichert, die sog. Beschaltungsenergie. Diese Energie soll in die Gleichspannungsquelle, z.B. die Zwischenkreisspannung, zurückgespeist werden. Beim Schalten der Halbleiterschalter (V1, V2) wird die Beschaltungsenergie an den Rückspeisekondensator (CR) übergeben. Im Einzelnen laufen folgende Schritte ab (**Figur 3**):

- Das Halbleiterventil (SR) sei ein nichtabschaltbarer Thyristor.
- Zum Zeitpunkt t1 sei CR auf Ucr0 geladen.
- Die Halbleiterschalter (V1, V2) schalten, und CR lädt sich während t1..t2 auf Ucr1 auf. Die beim Umschaltvorgang gespeicherten Beschaltungsverluste betragen $Q = \frac{1}{2}CR * Ucr1^2 - \frac{1}{2}CR * Ucr0^2$.
- Zum Zeitpunkt t3 wird das Halbleiterventil (SR) eingeschaltet. Damit entlädt sich CR über den Transformator (TR) auf Ucr2 = 2 Udc - Ucr1. Der Entladestrom (Isr) fliesst durch das Halbleiterventil (SR) und wird vom Transformator (TR) auf die Sekundärseite übersetzt.
- Sekundärseitig wir die Energie in den Zwischenkreiskondensator (CZK) zurückgespeist.
- Zum Zeitpunkt t4 wird der Strom durch SR Null, d.h. SR sperrt wieder.
- Die in der Transformator-Wicklung gespeicherte Energie wird im Widerstand RT dissipiert.

Es ist auch möglich SR vor dem Zeitpunkt t2 einzuschalten. Bedingung ist nur, dass Ucr > Udc ist. Die obigen Vorgänge überlagern sich in diesem Fall. Der Endwert von Ucr (Ucr2) ändert sich aber nicht.

Es ist darauf zu achten, dass Ucr2 > 0 ist, d.h. Ucr1 < 2*Udc. Für den Rückspeisekondensator und Udc gilt folgende Bedingung:

ungünstigster Fall:       Ucr0 = Udc1 und Q = Qmax

                       ==> $Q_{max} < 1.5 * CR * Udc^2$

                       (Udc1 = auf Primärseite bezogene Zwischenkreisspannung)

Falls als Halbleiterventil (SR) ein abschaltbares Bauelement (GTO, IGBT) verwendet wird, so muss das Ventil kurz bevor Ucr < 0 wird geöffnet werden. Die Bedingung, dass $Q_{max} < 1.5 * CR * Udc^2$ muss dann nicht mehr eingehalten werden. Die Spannungsverläufe mit einem solchen Halbleiterventil sind in **Figur 4** dargestellt.

Bei der Verwendung eines abschaltbaren Halbleiterventils (SR) zeichnet sich eine bevorzugte Ausführungsform dadurch aus, dass der Widerstand (RT) durch eine Kondensator (CT) ersetzt wird. Der Kondensator wird zwischen der Anode der Rückspeisediode (DT) und den gemeinsamen Knoten des Entlastungskondensator (CB1), der Entlastungsdiode (DB1) und der sekundärwicklung geschaltet. Parallel zum Kondensator (CT) ist eine Serienschaltung einer Induktivität (LCT) und einer weiteren Diode (DCT) vorgesehen. Die Diode (DCT) ist so angeordnet, dass ihre Anode mit der Anode der Entlastungsdiode (DB1) verbunden ist.

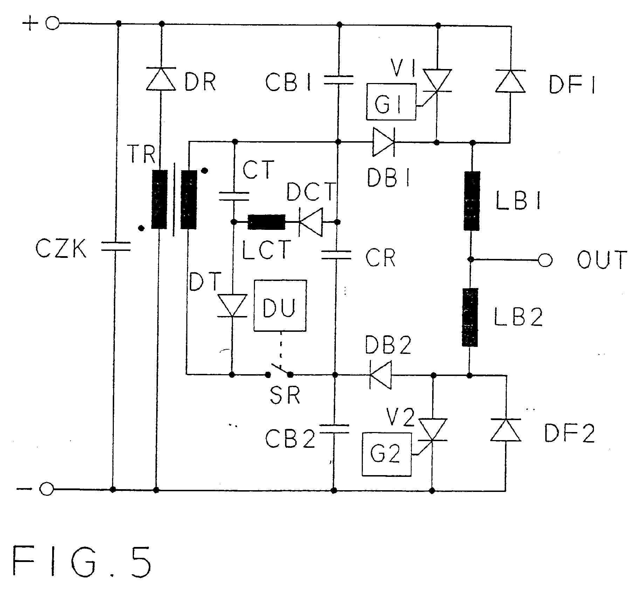

Diese Ausführungsform ist in **Figur 5** dargestellt. Wie man sofort sieht, weist diese Schaltung keinen einzigen ohmschen Widerstand mehr auf. Deshalb ist es möglich, einen Wirkungsgrad von theoretisch 100% zu erreichen. Die in der Transformatorinduktivität gespeicherte Energie wird nicht mehr im Widerstand (RT) dissipiert, sondern in CT eingespeist und kann beim nächsten Schalten des Halbleiterventils (SR) ebenfalls zurückgespeist werden.

Im einzelnen laufen folgende zusätzliche Schritte ab:

- Nach dem Ausschalten von SR fliesst der Strom durch die Primärwicklung des Transformators durch CT und DT. Dabei wird CT positiv aufgeladen bis der Transformatorstrom null wird. Die in der Transformator-Induktivität gespeicherte Energie wurde somit auf CT (Spannung > 0) umgelagert.
- Durch diese positive Spannung wird die Diode (DCT) leitend und die Spannung an CT schwingt durch LCT um. Die Energie ist wieder in CT gespeichert, die Spannung über CT aber negativ.
- Beim nächsten Schalten von SR kann nun auch diese in CT gespeicherte Energie zurückgespeist werden.

Diese Ausführungsform zeichnet sich also dadurch aus, dass keine ohmschen Widerstände mehr vorhanden sind, und die gesamte Beschaltungsenergie verlustlos in den Zwischenkreiskondensator (CZK) zurückgespeist werden kann.

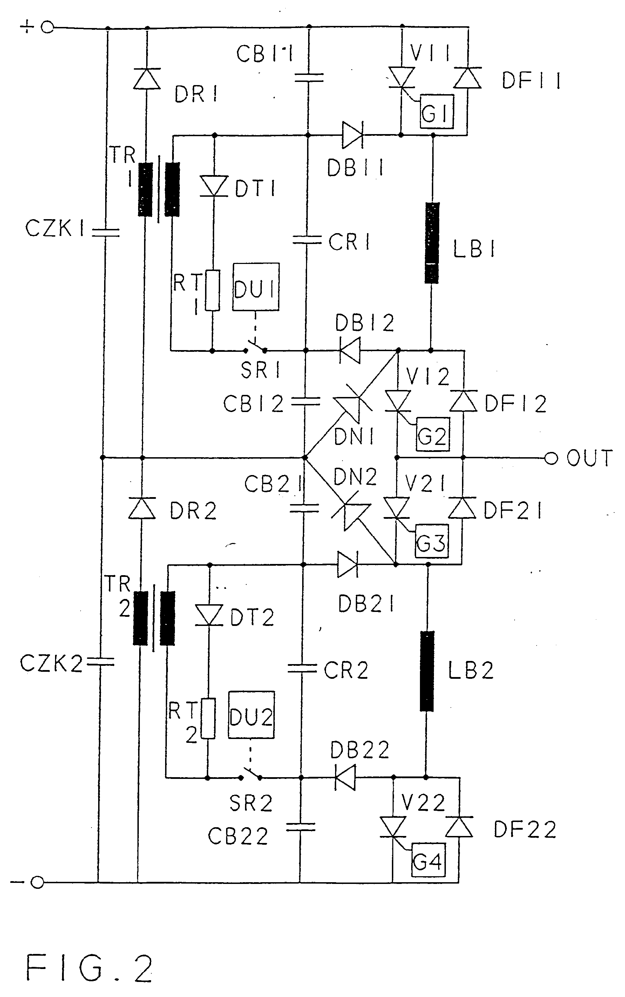

**Figur 2** zeigt das Schaltschema einer Halbbrücke eines Dreipunkt-Wechselrichters. Im Gegensatz zum Zweipunkt-Wechselrichter, welcher nur zwei stabile Schaltzustände besitzt, weist ein Dreipunkt-Wechselrich-

4

ter drei stabile Schaltzustände auf.

Eine Dreipunkt-Wechselrichter-Halbbrücke ist aus vier Halbleiterschaltern (V11, V12, V21, V22) aufgebaut. In jedem Schaltzustand sind zwei Halbleiterschalter eingeschaltet. Beim ersten Schaltzustand wird die positive Zwischenkreisspannung über den ersten (V11) und den zweiten Schalter (V12) bzw. deren antiparallele Freilaufdioden (DF11, DF12) an den Ausgang (OUT) gelegt. Beim zweiten Schaltzustand wird der Zwischenkreismittelpunkt über den zweiten (V12) und den dritten Schalter (V21) bzw. deren antiparallele Freilaufdioden (DF12, DF21) an den Ausgang (OUT) gelegt. Beim dritten Schaltzustand schliesslich wird die negative Zwischenkreisspannung über den dritten Schalter (V21) und den vierten Schalter (V22) bzw. deren antiparallel Freilaufdioden (DF21, DF22) an den Ausgang (OUT) gelegt.

Den vier Halbleiterschaltern (V11, V12, V21, V22) ist je eine Freilaufdiode (DF11, DF12, DF21, DF22) antiparallel geschaltet. Die Schalter werden wie beim Zweipunkt-Wechselrichter mittels Entlastungskondensatoren (CB11, CB12, CB21, CB22) und Entlastungsdioden (DB11, DB12, DB21, DB22) vor zu raschem Spannungsanstieg geschützt. Zwischen den Schaltern V11 und V12 bzw. V21 und V22 ist je eine Stromanstiegsbegrenzungsdrossel (LB1 bzw. LB2) in Serie geschaltet. Die Schalter V12 und V21 bilden eine Serienschaltung, wobei die Kathode des Schalters V12 mit der Anode des Schalters V21 verbunden ist. Dieser Verbindungspunkt bildet auch den Ausgang (OUT). Damit der Zwischenkreismittelpunkt an den Ausgang (OUT) geschaltet werden kann, sind die Anode des Schalters V12 bzw. die Kathode des Schalters V21 über je eine Diode (DN1 bzw. DN2) mit dem Zwischenkreismittelpunkt verbunden. Die Verbindung ist derart, dass die Kathode von DN1 mit der Anode von V12 bzw. die Anode von DN2 mit der Kathode von V21 verbunden ist. Der Zwischenkreismittelpunkt wird durch den gemeinsamen Knoten des aufgeteilten Zwischenkreiskondensators (CZK1, CZK2) gebildet.

Wie Figur 2 zeigt, besteht ein Dreipunkt-Wechselrichter aus zwei gleichen Teilen, welche je im wesentlichen wie ein Zweipunkt-Wechselrichter aufgebaut sind. Deshalb sind auch zwei Rückspeiseschaltungsteile, welche gleich aufgebaut sind wie beim Zweipunkt-Wechselrichter, nötig.

Zwischen den Entlastungskondensatoren CB11 und CB12 bzw. CB21 und CB22 ist je ein Rückspeisekondensator (CR1, CR2) angeordnet. Parallel dazu liegen die Rückspeisemittel, welche wiederum aus einem Halbleiterventil (SR1 bzw. SR2), einem Transformator (TR1 bzw. TR2) und einer zur Primärwicklung parallel liegenden Serienschaltung einer Diode (DT1 bzw. DT2) und eines Widerstandes (RT1 bzw. RT2) bestehen. Die Sekundärwicklung des ersten Transformator (TR1) ist über eine Diode (DR1) einerseits mit dem Plus-Eingang (+) und andererseits mit dem Zwischenkreismittelpunkt verbunden. Die Sekundärwicklung des zweiten Transformator (TR2) ist über eine Diode (DR2) einerseits mit dem Zwischenkreismittelpunkt und andererseits dem Minus-Eingang (-) mit verbunden.

Die Rückspeisung der Beschaltungsenergie erfolgt analog zum Zweipunkt-Wechselrichter: Die in den Beschaltungsreaktanzen (CB11, CB12, CB21, CB22, LB1, LB2) gespeicherte Energie wird wiederum an den zugehörigen Rückspeisekondensator (CR1, CR2) übergeben. Nach dem Schalten der Halbleiterschalter (V11, V12, V21, V22) wird diese Beschaltungsenergie durch einmaliges Schalten der Halbleiterventile (SR1, SR2) in den aufgeteilten Zwischenkreiskondensator (CZK1, CZK2) zurückgespeist.

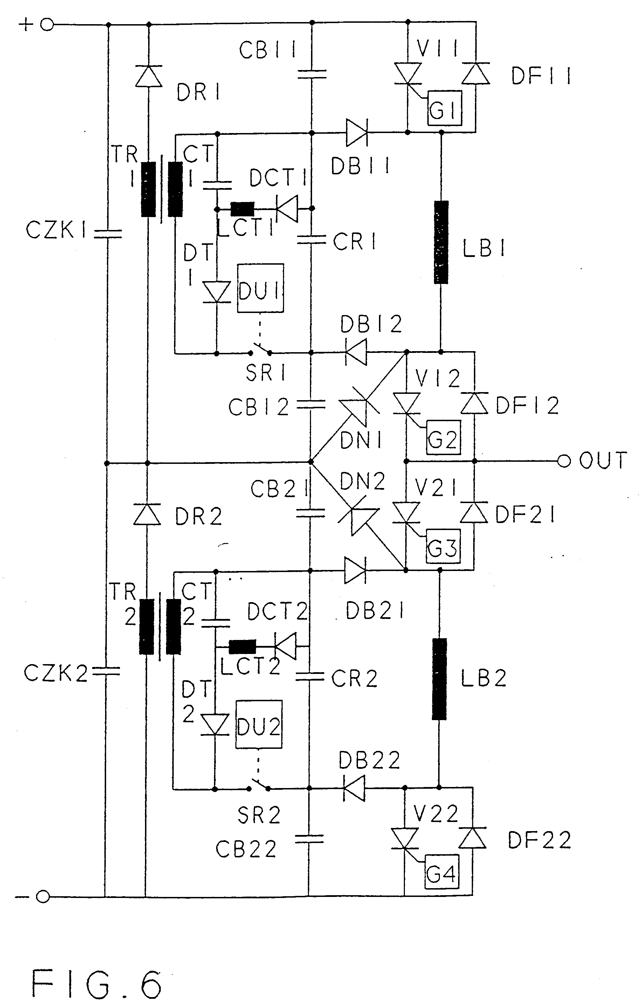

Eine bevorzugte Ausführungsform eines Dreipunkt-Wechselrichters zeigt die **Figur 6**. Analog zum Zweipunkt-Wechselrichter (Figur 5) werden die Widerstände (RT1 bzw. RT2) je durch ein Parallelschaltung eines Kondensators (CT1 bzw. CT2) und einer Serieschaltung einer Induktivität (LCT1 bzw. LCT2) und einer Diode (DCT1 bzw. DCT2) ersetzt. Die Schaltung funktioniert gleich wie diejenige eines Zweipunkt-Wechselrichters. Deshalb kann hier auf eine ausführlichere Erläuterung des Funktionsprinzipes verzichtet werden. Durch den Verzicht auf ohmsche Elemente erreicht man auch bei dieser speziellen Ausführungsform einen theoretischen Wirkungsgrad von 100%.

Den Rückspeise-Verfahren für beide Wechselrichtertypen, Zweipunkt-Wechselrichter und Dreipunkt-Wechselrichter, ist also gemeinsam, dass

- die Beschaltungsenergie beim Schalten der Halbleiterschalter (V1, V2, V11, V12, V21, V22) an die Rückspeisekondensatoren (CR, CR1, CR2) übergeben wird;
- nach dem Schalten der Halbleiterschalter (V1, V2, V11, V12, V21, V22) durch einmaliges Schalten der Halbleiterventile (SR, SR1, SR2) der Rückspeisekondensator (CR, CR1, CR2) über den Transformator (TR, TR1, TR2) entladen wird;
- dieser Entlade-Strom auf die Sekundärseite übersetzt wird und über die Rückspeisediode (DR, DR1, DR2) den Zwischenkreiskondensator (CZK, CZK1, CZK2) auflädt;
- die in der Transformator-Induktivität gespeicherte Energie im Widerstand (RT, RT1, RT2) dissipiert oder an den Kondensator (CT, CT1, CT2) übergeben wird.

Da nur noch die in der Transformator-Induktivität gespeicherte Energie verheizt wird, ist der Wirkungsgrad der erfindungsgemässen Anordnung sehr hoch.

Bei der speziellen Ausführungsform nach den Figuren 5 und 6 wird die in der Transformator-Induktivität gespeicherte Energie nicht im Widerstand (RT, RT1 bzw. RT2) dissipiert, sondern dem Kondensator (CT, CT1 bzw. CT2) übergeben, umgelagert und beim nächsten Schaltvorgang zurückgespeist. Der Wirkungsgrad dieser Ausführungsformen, welche kein ohmsches Bauteil mehr aufweisen, beträgt theoretisch sogar 100%.

Allen Schaltung ist gemeinsam, dass der Rückspeisevorgang sehr schnell abläuft, da der Resonanzkreis, gebildet durch den Rückspeisekondensator und den Transformator, für die Zeitkonstante des Vorgangs massgebend ist. Die Beschaltungsenergie kann auf die Weise sehr rasch abgeführt werden. Man erreicht dadurch hohe Ein-/Ausschaltzeiten der Halbleiterschalter bei gleichzeitig hohem Wirkungsgrad. Diese beiden Parameter können im wesentlichen unabhängig voneinander optimiert werden.

Die Erfindung weist also bezüglich minimaler Ein- und Ausschaltdauer der Halbleiterschalter und maximalem Wirkungsgrad einen optimalen Aufbau auf.

**Bezeichnungsliste**

| | |
|---|---|
| V1, V2 | Halbleiterschalter |
| V11, V12, V21, V22 | Erste-vierte Halbleiterschalter |
| G1, G2, G3, G4 | Gate-Units |
| DF1, DF2 | Freilaufdioden |
| DF11, DF12, DF21, DF22 | Freilaufdioden |
| CB1, CB2 | Entlastungskondensatoren |
| DB1, DB2 | Entlastungsdioden |
| CB11, CB12, CB21, CB22 | Erste-vierte Entlastungskondensatoren |
| DB11, DB12, DB21, DB22 | Erste-vierte Entlastungsdioden |
| LB1, LB2 | Stromanstiegsbegrenzungsdrosseln |
| CR, CR1, CR2 | Rückspeisekondensatoren |
| SR, SR1, SR2 | Halbleiterventile |
| DU, DU1, DU2 | Drive-Units |
| RT, RT1, RT2 | Widerstände |
| DT, DT1, DT2 | Dioden |
| TR, TR1, TR2 | Transformatoren |
| DR, DR1, DR2 | Rückspeisedioden |
| CZK, CZK1, CZK2 | Zwischenkreiskondensatoren |
| DN1, DN2 | Dioden |
| CT, CT1, CT2 | Kondensatoren |
| LCT, LCT1, LCT2 | Induktivitäten |
| DCT, DCT1, DCT2 | Dioden |
| OUT | Ausgang |
| + | Plus-Eingang |
| - | Minus-Eingang |
| Ucri | Spannung über CR zu verschiedenen Zeitpunkten |
| Isr | Strom durch SR |
| Udc | Spannung der Gleichspannungsquelle, Zwischenkreisspannung |
| Udc1 | Zwischenkreisspannung auf die Transformator Primärseite bezogen |

**Patentansprüche**

1. Zweipunkt-Wechselrichter umfassend
   a) einen Plus- und einen Minus-Eingang (+, -), an welche eine Gleichspannungsquelle angeschlossen werden kann;
   b) zwei Halbleiterschalter (V1, V2), zu denen je eine Freilaufdiode (DF1, DF2) antiparallel geschaltet ist und welche von je einer Gate-Unit (G1, G2) angesteuert werden, wobei die Anode des ersten Halbleiterschalters (V1) mit dem Plus-Eingang (+) und die Kathode des zweiten Halbleiterschalters (V2) mit dem Minus-Eingang (-) verbunden ist;
   c) zwei Stromanstiegsbegrenzungsdrosseln (LB1, LB2), welche zwischen den zwei Halbleiterschaltern (V1, V2) in Serie geschaltet sind und der Begrenzung des Stromanstiegs in den Halbleiterschaltern dienen;
   d) einen Ausgang (OUT), der zwischen den beiden Stromanstiegsbegrenzungsdrosseln (LB1, LB2) angeordnet ist;

e) zwei Entlastungskondensatoren (CB1, CB2), welche über je eine Entlastungsdiode (DB1, DB2) parallel zu den Halbleiterschaltern (V1, V2) angeordnet sind und der Begrenzung des Spannungsanstiegs am Halbleiterschalter dienen, wobei die Kathode der ersten Entlastungsdiode (DB1) mit der Kathode des ersten Halbleiterschalters (V1) und die Anode der zweiten Entlastungsdiode (DB2) mit der Anode des zweiten Halbleiterschalters (V2) verbunden ist;

f) einen Rückspeisekondensator (CR), welcher zwischen der Anode der ersten Entlastungsdiode (DB1) und der Kathode der zweiten Entlastungsdiode (DB2) angeordnet ist;

g) einen Zwischenkreiskondensator (CZK), welcher zwischen dem Plus-Eingang (+) und dem Minus-Eingang (-) angeordnet ist; sowie

h) Mittel zur Rückspeisung der in den Stromanstiegsbegrenzungsdrosseln (LB1, LB2) und Entlastungskondensatoren (CB1, CB2) gespeicherten Energie;

dadurch gekennzeichnet, dass die Mittel zur Rückspeisung

i) parallel zum Rückspeisekondensator (CR) geschaltet sind und umfassen:

j) ein Halbleiterventil (SR), welches durch eine Drive-Unit (DU) angesteuert wird und in Verbindung mit dem Rückspeisekondensator (CR), der Kathode der zweiten Entlastungsdiode (DB2) und dem zweiten Entlastungskondensator (CB2) steht;

k) einen Transformator (TR), dessen Primärwicklung einerseits dem Halbleiterventil (SR) verbunden ist und andererseits mit dem Rückspeisekondensator (CR), der Anode der ersten Entlastungsdiode (DB1) und dem ersten Entlastungskondensator (CB1), und dessen Sekundärwicklung einerseits über einer Rückspeisediode (DR) mit dem Plus-Eingang und andererseits direkt mit dem Minus-Eingang verbunden ist, wobei die Anode der Rückspeisediode (DR) mit der Sekundärwicklung des Transformators (TR) verbunden ist; sowie

l) eine Serienschaltung einer Diode (DT) und eines Widerstands (RT), welche parallel zur Primärwicklung geschaltet ist, derart, dass die Anode der Diode (DT) mit der Anode der ersten Entlastungsdiode (DB1) verbunden ist.

2. Wechselrichter nach Anspruch 1, dadurch gekennzeichnet, dass als Halbleiterschalter (V1, V2) abschaltbare Ventile, insbesondere abschaltbare Gate-Turn-Off-Thyristoren verwendet werden.

3. Wechselrichter nach Anspruch 1 oder 2, dadurch gekennzeichnet, dass als Halbleiterventil (SR) nichtabschaltbare Ventile, insbesondere Thyristoren verwendet werden.

4. Wechselrichter nach Anspruch 1 oder 2, dadurch gekennzeichnet, dass als Halbleiterventil (SR) abschaltbare Ventile, insbesondere Bipolartransistoren, IGBTs oder GTOs verwendet werden.

5. Wechselrichter nach Anspruch 4, dadurch gekennzeichnet, dass anstelle des Widerstandes (RT) eine Parallelschaltung eines Kondensators (CT) und einer Serienschaltung bestehend aus einer Diode (DCT) und einer Induktivität (LCT) zwischen der Anode und Rückspeisediode (DT) und dem gemeinsamen Knoten der ersten Entlastungsdiode (DB1), des ersten Entlastungskondensators (CB1) und des Rückspeisekondensators (CR) angeordnet ist, wobei die Anode der Diode (DCT) mit der Anode der ersten Entlastungsdiode (DB1) verbunden ist.

6. Dreipunkt-Wechselrichter umfassend

a) einen Plus- und einen Minus-Eingang (+, -), an welche eine Gleichspannungsquelle angeschlossen werden kann;

b) vier Halbleiterschalter (V11, V21, V12, V22), zu denen je eine Freilaufdiode (DF11, DF12, DF12, DF22) antiparallel geschaltet ist und welche von je einer Gate-Unit (G1, G2, G3, G4) angesteuert werden, wobei die Anode des ersten Halbleiterschalters (V11) mit dem Plus-Eingang und die Kathode des vierten Halbleiterschalters (V22) mit dem Minus-Eingang verbunden sind, und der zweite Halbleiterschalter (V12) mit seiner Kathode an die Anode des dritten Halbleiterschalters (V21) angeschlossen ist;

c) zwei Stromanstiegsbegrenzungsdrosseln (LB1, LB2), welche der Begrenzung des Stromanstiegs in den Halbleiterschaltern (V11, V12, V21, V22) dienen, wobei die erste Induktivität (LB1) zwischen der Kathode des ersten Halbleiterschalters (V11) und der Anode des zweiten Halbleiterschalters (V12) in Serie geschaltet ist, und die zweite Induktivität (LB2) zwischen der Kathode des dritten Halbleiterschalters (V21) und der Anode des vierten Halbleiterschalters (V22) in Serie geschaltet ist;

d) einen Ausgang (OUT), der zwischen den Halbleiterschaltern (V12) und (V21) angeordnet ist;

e) vier Entlastungskondensatoren (CB11, CB12, CB21, CB22), welche über je eine Entlastungsdiode (DB11, DB22 bzw. DB12, DB21) parallel zu den Halbleiterschaltern (V11, V22) bzw. zur Serieschaltung der Halbleiterschalter (V12 und V21) angeordnet sind und der Begrenzung des Spannungsanstiegs am Halbleiterschalter dienen, wobei die Kathode der ersten Entlastungsdiode (DB11) mit der Kathode des ersten Halbleiterschalters (V11) und die Anode der zweiten Entlastungsdiode (DB12) mit der Anode des zweiten Halbleiterschalters (V12) bzw. die Kathode der dritten Entlastungsdiode (DB21) mit der Kathode des dritten Halbleiterschalters (V21) und die Anode der vierten Entlastungsdiode (DB22) mit der Anode des vierten Halbleiterschalters (V22) verbunden sind;

f) zwei Rückspeisekondensatoren (CR1 bzw CR2), welche zwischen der Anode der ersten Entlastungsdiode (DB11) und der Kathode der zweiten Entlastungsdiode (DB12) bzw. zwischen der Anode der dritten Entlastungsdiode (DB21) und der Kathode der vierten Entlastungsdiode (DB22) angeordnet sind;

g) zwei Dioden (DN1, DN2), die in Serie geschaltet sind, wobei die Anode der zweiten Diode (DN2) mit der Kathode des dritten Halbleiterschalters (V21) verbunden ist, die Kathode der ersten Diode (DN1) mit der Anode des zweiten Halbleiterschalters (V12) verbunden ist, und die Anode der ersten Diode (DN1) bzw. die Kathode der zweiten Diode (DN2) mit dem gemeinsamen Knoten der Entlastungskondensatoren (CB12, CB21) verbunden ist;

h) zwei Zwischenkreiskondensatoren (CZK1 und CZK2), welche in Serie geschaltet sind, derart, dass der erste Anschluss der Serienschaltung mit dem Plus-Eingang (+), der zweite Anschluss der Serienschaltung mit dem Minus-Eingang (-) und deren gemeinsamer Knoten mit dem gemeinsamen Knoten der Entlastungskondensatoren (CB12, CB21) verbunden ist; sowie

i) Mittel zur Rückspeisung der in den Stromanstiegsbegrenzungsdrosseln (LB1, LB2) und Entlastungskondensatoren (CB11, CB12, CB21, CB22) gespeicherten Energie;

dadurch gekennzeichnet, dass die Mittel zur Rückspeisung

j) parallel zum jeweiligen Rückspeisekondensator (CR1 bzw. CR2) geschaltet sind und je umfassen:

k) ein Halbleiterventil (SR1 bzw. SR2), welches durch eine Drive-Unit (DU1 bzw. DU2) angesteuert wird und in Verbindung mit dem Rückspeisekondensator (CR1 bzw. CR2), der Kathode der Entlastungsdiode (DB12 bzw. DB22) und dem Entlastungskondensator (CB12 bzw. CB22) steht;

l) einen Transformator (TR1 bzw. TR2), dessen Primärwicklung einerseits mit dem zweiten Anschluss des Halbleiterventils (SR1 bzw. SR2) verbunden ist und andererseits mit dem Rückspeisekondensator (CR1 bzw. CR2), der Anode der Entlastungsdiode (DB11 bzw. DB21) und dem Entlastungskondensator (CB11 bzw. CB21), wobei die Sekundärwicklung des Transformators (TR1) einerseits über eine Diode (DR1) mit dem Plus-Eingang und andererseits mit der Sekundärwicklung des anderen Transformators (TR2) sowie des gemeinsamen Berührungspunktes der Dioden (DN1 und DN2) verbunden ist, und die Sekundärwicklung des zweiten Transformators (TR2) einerseits über einer Diode (DR2) mit der Sekundärwicklung des Transformators (TR1) und andererseits direkt mit dem Minus-Eingang verbunden ist;

m) je eine Serienschaltung einer Diode (DT1 bzw. DT2) und eines Widerstands (RT1 bzw. RT2), welche parallel zur jeweiligen Primärwicklung geschaltet ist, derart, dass die Anode der ersten Diode (DT1) mit der Anode der ersten Entlastungsdiode (DB11) und die Anode der zweiten Diode (DT2) mit der Anode der dritten Entlastungsdiode (DB21) verbunden ist.

7. Wechselrichter nach Anspruch 6 dadurch gekennzeichnet, dass als Halbleiterschalter (V11, V12, V21, V22) abschaltbare Ventile, insbesondere abschaltbare Gate-Turn-Off-Thyristoren verwendet werden.

8. Wechselrichter nach Anspruch 6 oder 7, dadurch gekennzeichnet, dass als Halbleiterventile (SR1, SR2) nicht-abschaltbare Ventile, insbesondere Thyristoren verwendet werden.

9. Wechselrichter nach Anspruch 6 oder 7, dadurch gekennzeichnet, dass als Halbleiterventile (SR1, SR2) abschaltbare Ventile, insbesondere Bipolartransistoren, IGBTs oder GTOs verwendet werden.

10. Wechselrichter nach Anspruch 9, dadurch gekennzeichnet, dass anstelle der Widerstände (RT1 bzw. RT2) je eine Parallelschaltung eines Kondensators (CT1 bzw. CT2) und einer Serienschaltung bestehend aus einer Induktivität (LCT1 bzw. LCT2) und einer Diode (DCT1 bzw. DCT2) zwischen der Anode der jeweiligen Rückspeisediode (DT1 bzw. DT2) und dem jeweiligen gemeinsamen Knoten der Entlastungsdioden (DB11 bzw. DB21), der Entlastungskondensatoren (CB11 bzw. CB21) und der Rückspeisekondensatoren (CR1 bzw. CR2) angeordnet ist, wobei die Anoden der Dioden (DCT1 bzw. DCT2) mit den Anoden der Entlastungsdiode (DB11 bzw. DB21) verbunden sind.

11. Verfahren zur Rückspeisung der Beschaltung eines Wechselrichters nach Anspruch 1 bzw. 6, dadurch

EP 0 588 011 B1

gekennzeichnet, dass

a) die in den Stromanstiegsbegrenzungsdrosseln (LB1, LB2 bzw. LB11, LB12, LB21, LB22) und den Entlastungskondensatoren (CB1, CB2 bzw. CB11, CB12, CB21, CB22) gespeicherte Energie nach dem Schalten der Halbleiterschalter (V1, V2 bzw. V11, V12, V21, V22) an den Rückspeisekondensator (CR bzw. CR1, CR2) übergeben wird;

b) nachdem die Energie an den Rückspeisekondensator (CR bzw. CR1, CR2) übergeben worden ist, das Halbleiterventil (SR bzw. SR1, SR2) eingeschaltet wird, und ein Entlade-Strom des Rückspeisekondensators (CR bzw. CR1, CR2) auf die Sekundärseite des Transformators (TR bzw. TR1, TR2) übertragen wird;

c) die so übertragene Energie im Zwischenkreiskondensator (CZK bzw. CZK1, CZK2) gespeichert wird; und

d) die im Transformator (TR bzw. TR1, TR2) gespeicherte Energie im Widerstand (RT, bzw. RT1, RT2) dissipiert wird.

12. Verfahren nach Anspruch 11, dadurch gekennzeichnet, dass im Falle eines abschaltbaren Halbleiterventils (SR bzw. SR1, SR2) das Ventil kurz bevor der Rückspeisekondensator (CR bzw. CR1, CR2) vollständig entladen ist geöffnet wird.


**Claims**

1. Two-point inverter, comprising

a) a positive and a negative input (+, -) to which a direct-voltage source can be connected;

b) two semiconductor switches (V1, V2) in antiparallel with which one free-wheeling diode (DF1, DF2) is connected in each case and which are driven by one gate unit (G1, G2) in each case, the anode of the first semiconductor switch (V1) being connected to the positive input (+) and the cathode of the second semiconductor switch (V2) being connected to the negative input (-);

c) two current-rise limiting chokes (LB1, LB2) which are connected in series between the two semiconductor switches (V1, V2) and serve to limit the current rise in the semiconductor switches;

d) an output (OUT) which is disposed between the two current-rise limiting chokes (LB1, LB2);

e) two load-reducing capacitors (CB1, CB2) which are disposed in parallel with the semiconductor switches (V1, V2) via one load-reducing diode (DB1, DB2) in each case and serve to limit the voltage rise across the semiconductor switch, the cathode of the first load-reducing diode (DB1) being connected to the cathode of the first semiconductor switch (V1) and the anode of the second load-reducing diode (DB2) being connected to the anode of the second semiconductor switch (V2);

f) a feedback capacitor (CR) which is disposed between the anode of the first load-reducing diode (DB1) and the cathode of the second load-reducing diode (DB2);

g) a link capacitor (CZK) which is disposed between the positive input (+) and the negative input (-); and

h) means for feeding back the energy stored in the current-rise limiting chokes (LB1, LB2) and load-reducing capacitors (CB1, CB2);

characterized in that the means for feeding back

i) are connected in parallel with the feedback capacitor (CR) and comprise:

j) a semiconductor valve (SR) which is driven by a drive unit (DU) and is connected to the feedback capacitor (CR), the cathode of the second load-reducing diode (DB2) and the second load-reducing capacitor (CB2);

k) a transformer (TR) whose primary winding is connected, on the one hand, to the semiconductor valve (SR) and, on the other hand, to the feedback capacitor (CR), the anode of the first load-reducing diode (DB1) and the first load-reducing capacitor (CB1), and whose secondary winding is connected, on the one hand, to the positive input via a feedback diode (DR) and, on the other hand, directly to the negative input, the anode of the feedback diode (DR) being connected to the secondary winding of the transformer (TR); and

l) a series circuit of a diode (DT) and a resistor (RT), which circuit is connected in parallel with the primary winding in such a way that the anode of the diode (DT) is connected to the anode of the first load-reducing diode (DB1).

2. Inverter according to Claim 1, characterized in that turn-off valves, in particular gate-turn-off thyristors are used as semiconductor switches (V1, V2).

9

3. Inverter according to Claim 1 or 2, characterized in that non-turn-off valves, in particular thyristors, are used as semiconductor valves (SR).

4. Inverter according to Claim 1 or 2, characterized in that turn-off valves, in particular bipolar transistors, IGBTs or GTOs, are used as semiconductor valves (SR).

5. Inverter according to Claim 4, characterized in that, instead of the resistor (RT), a parallel circuit of a capacitor (CT) and a series circuit comprising a diode (DCT) and an inductor (LCT) is disposed between the anode and the feedback diode (DT) and the common node of the first load-reducing diode (DB1), the first load-reducing capacitor (CB1) and the feedback capacitor (CR), the anode of the diode (DCT) being connected to the anode of the first load-reducing diode (DB1).

6. Three-point inverter comprising
   a) a positive and a negative input (+, -) to which a direct voltage source can be connected;
   b) four semiconductor switches (V11, V21, V12, V22) with which one free-wheeling diode (DF11, DF12, DF12 [sic], DF22) is connected in antiparallel in each case and which are driven by a gate unit (G1, G2, G3, G4) in each case, the anode of the first semiconductor switch (V11) being connected to the positive input and the cathode of the fourth semiconductor switch (V22) being connected to the negative input, and the second semiconductor switch (V12) being connected by means of its cathode to the anode of the third semiconductor switch (V21);
   c) two current-rise limiting chokes (LB1, LB2) which serve to limit the current rise in the semiconductor switches (V11, V12, V21, V22), the first inductor (LB1) being connected in series between the cathode of the first semiconductor switch (V11) and the anode of the second semiconductor switch (V12) and the second inductor (LB2) being connected in series between the cathode of the third semiconductor switch (V21) and the anode of the fourth semiconductor switch (V22);
   d) an output (OUT) which is disposed between the semiconductor switches (V12) and (V21);
   e) four load-reducing capacitors (CB11, CB12, CB21, CB22) which are disposed in parallel with the semiconductor switches (V11, V22) or with the series circuit of the semiconductor switches (V12 and V21) via one load-reducing diode (DB11, DB22 or DB12, DB21) in each case and serve to limit the voltage rise across the semiconductor switch, the cathode of the first load-reducing diode (DB11) being connected to the cathode of the first semiconductor switch (V11) and the anode of the second load-reducing diode (DB12) being connected to the anode of the second semiconductor switch (V12), or the cathode of the third load-reducing diode (DB21) being connected to the cathode of the third semiconductor switch (V21) and the anode of the fourth load-reducing diode (DB22) being connected to the anode of the fourth semiconductor switch (V22);
   f) two feedback capacitors (CR1 and CR2, respectively) which are disposed between the anode of the first load-reducing diode (DB11) and the cathode of the second load-reducing diode (DB12), or between the anode of the third load-reducing diode (DB21) and the cathode of the fourth load-reducing diode (DB22);
   g) two diodes (DN1, DN2) which are connected in series, the anode of the second diode (DN2) being connected to the cathode of the third semiconductor switch (V21), the cathode of the first diode (DN1) being connected to the anode of the second semiconductor switch (V12), and the anode of the first diode (DN1) or the cathode of the second diode (DN2) being connected to the common node of the loading-reducing capacitors (C12, C21);
   h) two link capacitors (CZK1 and CZK2) which are connected in series in such a way that the first terminal of the series circuit is connected to the positive input (+), the second terminal of the series circuit is connected to the negative input (-) and their common node is connected to the common node of the load-reducing capacitors (CB12, CB21); and
   i) means for feeding back the energy stored in the current-rise limiting chokes (LB1, LB2) and the load-reducing capacitors (CB11, CB12, CB21, CB22);
   characterized in that the feedback means
   j) are connected in parallel with the respective feedback capacitor (CR1 or CR2) and each comprise
   k) a semiconductor valve (SR1 or SR2) which is driven by a drive unit (DU1 or DU2) and is connected to the feedback capacitor (CR1 or CR2), the cathode of the load-reducing diode (DB12 or DB22) and the load-reducing capacitor (CB12 or CB22);
   l) a transformer (TR1 or TR2) whose primary winding is connected, on the one hand, to the second terminal of the semiconductor valve (SR1 or SR2) and, on the other hand to the feedback capacitor (CR1 or CR2), the anode of the load-reducing diode (DB11 or DB21) and the load-reducing capacitor (CB11 or CB21), the secondary winding of the transformer (TR1) being connected, on the one hand, via a diode (DR1) to the positive input and, on the other hand, to the secondary winding of the other transformer (TR2) and to the common contact point of the diodes (DN1 and DN2), and the secondary winding of the second transformer (TR2) being connected, on the one hand, via a diode (DR2) to the secondary winding of the transformer (TR1) and, on the other hand, directly to the negative input;
m) a series circuit of one diode (DT1 or DT2) and one resistor (RT1 or RT2) in each case which is connected in parallel with the respective primary winding in such a way that the anode of the first diode (DT1) is connected to the anode of the first load-reducing diode (DB11) and the anode of the second diode (DT2) is connected to the anode of the third load-reducing diode (DB21).

7. Inverter according to Claim 6 characterized in that turn-off valves, in particular gate-turn-off thyristors are used as semiconductor switches (V11, V12, V21, V22).

8. Inverter according to Claim 6 or 7, characterized in that non-turn-off valves, in particular thyristors, are used as semiconductor valves (SR1, SR2).

9. Inverter according to Claim 6 or 7, characterized in that turn-off valves, in particular bipolar transistors, IGBTs or GTOs, are used as semiconductor valves (SR1, SR2).

10. Inverter according to Claim 9, characterized in that, instead of the resistors (RT1 or RT2), one parallel circuit of a capacitor (CT1 or CT2) and a series circuit comprising an inductor (LCT1 or LCT2) and a diode (DCT1 or DCT2) is disposed in each case between the anode of the respective feedback diode (DT1 or DT2) and the respective common node of the load-reducing diodes (DB11 or DB21), the load-reducing capacitors (CB11 or CB21) and the feedback capacitors (CR1 or CR2), the anodes of the diodes (DCT1 or DCT2) being connected to the anodes of the load-reducing diodes (DB11 or DB21).

11. Method of feeding back the protective circuit of an inverter according to Claim 1 or 6, characterized in that
a) the energy stored in the current-rise limiting chokes (LB1, LB2, or LB11, LB12, LB21, LB22) and the load-reducing capacitors (CB1, CB2, or CB11, CB12, CB21, CB22) is transferred to the feedback capacitor (CR, or CR1, CR2) after the semiconductor switches (V1, V2, or V11, V12, V21, V22) have switched;
b) after the energy has been transferred to the feedback capacitor (CR, or CR1, CR2), the semiconductor valve (SR, or SR1, SR2) is turned on and a discharge current of the feedback capacitor (CR, or CR1, CR2) is transferred to the secondary side of the transformer (TR, or TR1, TR2);
c) the energy transferred in this way is stored in the link capacitor (CZK, or CZK1, CZK2); and
d) the energy stored in the transformer (TR, or TR1, TR2) is dissipated in the resistor (RT, or RT1, RT2).

12. Method according to Claim 11, characterized in that, in the case of a turn-off semiconductor valve (SR, or SR1, SR2), the valve is opened shortly before the feedback capacitor (CR, or CR1, CR2) is completely discharged.

**Revendications**

1. Onduleur bipolaire composé
a) d'une entrée positive et d'une entrée négative (+, -) sur lesquelles peut être raccordée une source de tension continue ;
b) de deux composants semiconducteurs de commutation (V1, V2), une diode de roue libre (DF1, DF2) étant montée en antiparallèle de chacun d'eux, et qui sont chacun commandés par une unité de commande de gâchette (G1, G2), l'anode du premier composant semiconducteur de commutation (V1) étant raccordée à l'entrée positive (+) et la cathode du deuxième composant semiconducteur de commutation (V2) étant raccordée à l'entrée négative (-) ;
c) de deux bobines de limitation de la croissance du courant (LB1, LB2) montées en série entre les deux composants semiconducteurs de commutation (V1, V2) et servant à la limitation de la croissance du courant dans les composants semiconducteurs de commutation ;
d) d'une sortie (OUT) qui est implantée entre les deux bobines de limitation de la croissance du courant (LB1, LB2) ;
e) de deux condensateurs de décharge (CB1, CB2) qui sont chacun montés en parallèle avec les composants semiconducteurs de commutation (V1, V2) à chaque fois au travers d'une diode de décharge (DB1, DB2) et qui servent à la limitation de la croissance de la tension aux bornes des composants semiconducteurs de commutation, la cathode de la première diode de décharge (DB1) étant raccordée à la cathode du premier composant semiconducteur de commutation (V1), et l'anode de la deuxième diode de décharge (DB2) étant raccordée à l'anode du deuxième composant semiconducteur de commutation (V2) ;

f) d'un condensateur de récupération (CR) qui est implanté entre l'anode de la première diode de décharge (DB1) et la cathode de la deuxième diode de décharge (DB2) ;

g) d'un condensateur de découplage intermédiaire (CZK) qui est implanté entre l'entrée positive (+) et l'entrée négative (-) ; ainsi que

h) d'un moyen de récupération de l'énergie emmagasinée dans les bobines de limitation de la croissance du courant (LB1, LB2) et dans les condensateurs de décharge (CB1, CB2) ;

caractérisé par le fait que

i) les éléments de récupération suivants sont montés en parallèle avec le condensateur de récupération (CR)

j) une valve à semiconducteur (SR) qui est commandée par une unité de commande (DU) et qui est reliée au condensateur de récupération (CR), à la cathode de la deuxième diode de décharge (DB2) et au deuxième condensateur de décharge (CB2) ;

k) un transformateur (TR) dont l'enroulement primaire est raccordé d'un côté à la valve à semiconducteur (SR) et de l'autre côté au condensateur de récupération (CR), à l'anode de la première diode de décharge (DB1) et au premier condensateur de décharge (CB1), et dont l'enroulement secondaire est raccordé d'un côté à l'entrée positive au travers d'une diode de récupération (DR), et de l'autre côté directement à l'entrée négative, l'anode de la diode de récupération (DR) étant ici raccordée à l'enroulement secondaire du transformateur (TR) ; et

l) un circuit série, composé d'une diode (DT) et d'un résistance (RT), qui est monté en parallèle avec l'enroulement primaire de telle façon que l'anode de la diode (DT) est raccordée à l'anode de la première diode de décharge (DB1).

2. Onduleur conforme à la revendication 1, caractérisé par le fait que ce sont de préférence des valves déclenchables, notamment des thyristors déclenchables par la gâchette, qui sont utilisées en tant que composants semiconducteurs de commutation (V1, V2).

3. Onduleur conforme à la revendication 1 ou 2, caractérisé par le fait que ce sont des valves non déclenchables, notamment des thyristors, qui sont utilisées en tant que valve à semiconducteur (SR).

4. Onduleur conforme à la revendication 1 ou 2, caractérisé par le fait que ce sont des valves déclenchables, notamment des transistors bipolaires, des GTO ou des IGBT, qui sont utilisées en tant que valve à semiconducteur (SR).

5. Onduleur conforme à la revendication 4, caractérisé par le fait qu'un circuit parallèle composé d'un condensateur (CT) et d'un circuit série composé d'une diode (DCT) et d'une inductance (LCT) est implanté à la place de la résistance (RT) entre l'anode de la diode de récupération (DT) et le noeud commun formé par la première diode de décharge (DB1), le premier condensateur de décharge (CB1) et le condensateur de récupération (CR), l'anode de la diode (DCT) étant raccordée à l'anode de la première diode de décharge (DB1).

6. Onduleur tripolaire composé

a) d'une entrée positive et d'une entrée négative (+, -) sur lesquelles peut être raccordée une source de tension continue ;

b) de quatre composants semiconducteurs de commutation (V11, V21, V12, V22), une diode de roue libre (DF11, DF12, DF21, DF22) étant montée en antiparallèle de chacun d'eux, et qui sont chacun commandés par une unité de commande de gâchette (G1, G2, G3, G4), l'anode du premier composant semiconducteur de commutation (V11) étant raccordée à l'entrée positive et la cathode du quatrième composant semiconducteur de commutation (V22) étant raccordée à l'entrée négative, et le deuxième composant semiconducteur de commutation (V12) étant raccordé par sa cathode à l'anode du troisième composant semiconducteur de commutation (V21) ;

c) de deux bobines de limitation de la croissance du courant (LB1, LB2) servant à la limitation de la croissance du courant dans les composants semiconducteurs de commutation (V11, V12, V21, V22), la première inductance (LB1) étant montée en série entre la cathode du premier composant semiconducteur de commutation (V11) et l'anode du deuxième composant semiconducteur de commutation (V12), et la deuxième inductance (LB2) étant montée en série entre la cathode du troisième composant semiconducteur de commutation (V21) et l'anode du quatrième composant semiconducteur de commutation (V22) ;

d) d'une sortie (OUT) qui est implantée entre les composants semiconducteurs de commutation (V12) et (V21);

e) de quatre condensateurs de décharge (CB11, CB12, CB21, CB22) qui sont chacun montés en parallèle avec les composants semiconducteurs de commutation (V11, V22) ou en parallèle avec le circuit série formé par les composants semiconducteurs de commutation (V12, V21), à chaque fois au travers d'une diode de décharge (DB11, DB22 ou DB12, DB21) et qui servent à la limitation de la croissance de la tension aux bornes du composant semiconducteur de commutation, la cathode de la première diode de décharge (DB11) étant raccordée à la cathode du premier composant semiconducteur de commutation (V11), et l'anode de la deuxième diode de décharge (DB12) étant raccordée à l'anode du deuxième composant semiconducteur de commutation (V12), ou la cathode de la troisième diode de décharge (DB21) étant raccordée à la cathode du troisième composant semiconducteur de commutation (V21) et l'anode de la quatrième diode de décharge (DB22) étant raccordée à l'anode du quatrième composant semiconducteur de commutation (V22) ;

f) de deux condensateurs de récupération (CR1, CR2) qui sont implantés entre l'anode de la première diode de décharge (DB11) et la cathode de la deuxième diode de décharge (DB12) ou entre l'anode de la troisième diode de décharge (DB21) et la cathode de la quatrième diode de décharge (DB22) ;

g) de deux diodes (DN1, DN2) montée en série, l'anode de la deuxième diode (DN2) étant raccordée à la cathode du troisième composant semiconducteur de commutation (V21), la cathode de la première diode (DN1) étant raccordée à l'anode du deuxième composant semiconducteur de commutation (V12), et l'anode de la première diode (DN1) ou la cathode de la deuxième diode (DN2) étant raccordée au noeud commun formé par les condensateurs de décharge (CB12, CB21) ;

h) de deux condensateurs de découplage intermédiaires (CZK1, CZK2) qui sont montés en série de telle façon à ce que la première borne du circuit série soit raccordée à l'entrée positive (+), la deuxième borne du circuit série soit raccordée à l'entrée négative (-) et que leur noeud commun soit raccordé au noeud commun formé par les condensateurs de décharge (CB12, CB21); ainsi que

i) d'un moyen de récupération de l'énergie emmagasinée dans les bobines de limitation de la croissance du courant (LB1, LB2) et dans les condensateurs de décharge (CB11, CB12, CB21, CB22) ; caractérisé par le fait que

j) les éléments de récupération suivants sont montés en parallèle avec chacun des condensateurs de récupération (CR1 ou CR2) :

k) une valve à semiconducteur (SR1 ou SR2) qui est commandée par une unité de commande (DU1 ou DU2) et qui est reliée au condensateur de récupération (CR1 ou CR2), à la cathode de la diode de décharge (DB12 ou DB22) et au condensateur de décharge (CB12 ou CB22) ;

l) un transformateur (TR1 ou TR2) dont l'enroulement primaire est raccordé d'un côté à la deuxième borne de la valve à semiconducteur (SR1 ou SR2) et de l'autre côté au condensateur de récupération (CR1 ou CR2), à l'anode de la diode de décharge (DB11 ou DB21) et au condensateur de décharge (CB11 ou CB21), l'enroulement secondaire du transformateur (TR1) étant raccordé d'un côté à l'entrée positive au travers d'une diode (DR1), et de l'autre côté à l'enroulement secondaire de l'autre transformateur (TR2) ainsi qu'au point de jonction commun formé par les diodes (DN1 et DN2), et l'enroulement secondaire du deuxième transformateur (TR2) étant relié d'un côté à l'enroulement secondaire du transformateur (TR1) au travers d'une diode (DR2) et de l'autre côté directement à l'entrée négative ;

m) un circuit série, composé à chaque fois d'une diode (DT1 ou DT2) et d'une résistance (RT1 ou RT2), est monté en parallèle avec chacun des enroulements primaires de telle façon que l'anode de la première diode (DT1) est raccordée à l'anode de la première diode de décharge (DB11) et que l'anode de la deuxième diode (DT2) est raccordée à l'anode de la troisième diode de décharge (DB21).

7.  Onduleur conforme à la revendication 6, caractérisé par le fait que ce sont de préférence des valves déclenchables, notamment des thyristors déclenchables par la gâchette, qui sont utilisées en tant que composants semiconducteurs de commutation (V11, V12, V21, V22).

8.  Onduleur conforme à la revendication 6 ou 7, caractérisé par le fait que ce sont des valves non déclenchables, notamment des thyristors, qui sont utilisées en tant que valve à semiconducteur (SR1, SR2).

9. Onduleur conforme à la revendication 6 ou 7, caractérisé par le fait que ce sont des valves déclenchables, notamment des transistors bipolaires, des GTO ou des IGBT, qui sont utilisées en tant que valve à semiconducteur (SR1, SR2).

10. Onduleur conforme à la revendication 9, caractérisé par le fait qu'un circuit parallèle composé d'un condensateur (CT1 ou CT2) et d'un circuit série composé d'une inductance (LCT1 ou LCT2) et d'une diode (DCT1 ou DCT2) est implanté à la place des résistances (RT1 ou RT2) entre l'anode de chacune des diodes de récupération (DT1 ou DT2) et chacun des noeuds communs formés par les diodes de décharge (DB11 ou DB21), les condensateurs de décharge (CB11 ou CB21) et les condensateurs de récupération (CR1 ou CR2), les anodes des diodes (DCT1 ou DCT2) étant raccordées aux anodes des diodes de décharge (DB11 ou DB21).

11. Méthode de récupération de la commutation d'un onduleur conforme à la revendication 1 ou 6, caractérisée par le fait que
   a) l'énergie emmagasinée dans les bobines de limitation de la croissance du courant (LB1, LB2 ou LB11, LB12, LB21, LB22) et dans les condensateurs de décharge (CB1, CB2 ou CB11, CB12, CB21, CB22) est transmise au condensateur de récupération (CR ou CR1, CR2) après la commutation des composants semiconducteurs de commutation (V1, V2 ou V11, V12, V21, V22) ;
   b) après que l'énergie ait été transmise au condensateur de récupération (CR ou CR1, CR2), la valve à semiconducteur (SR ou SR1, SR2) est enclenchée et un courant de décharge du condensateur de récupération (CR ou CR1, CR2) est transféré au côté secondaire du transformateur (TR ou TR1, TR2) ;
   c) l'énergie ainsi transmise est emmagasinée dans le condensateur de découplage intermédiaire (CZK ou CZK1, CZK2); et
   d) l'énergie emmagasinée dans le transformateur (TR ou TR1, TR2) est dissipée dans la résistance (RT ou RT1, RT2).

12. Méthode conforme à la revendication 11, caractérisée par le fait qu'en cas d'utilisation d'une valve à semiconducteur déclenchable (SR ou SR1, SR2), la valve est ouverte juste avant que le condensateur de récupération (CR ou CR1, CR2) ne soit complètement déchargé.

FIG. 1

FIG.2

FIG.3

FIG.4

FIG.5

F I G . 6